**Europäisches Patentamt**

**European Patent Office**

**Office européen des brevets**

(11) Veröffentlichungsnummer: **0 096 338**
**A2**

(12) # EUROPÄISCHE PATENTANMELDUNG

(21) Anmeldenummer: 83105378.0

(22) Anmeldetag: 31.05.83

(51) Int. Cl.³: **G 01 N 29/04**

(30) Priorität: 04.06.82 DE 3221021

(43) Veröffentlichungstag der Anmeldung:
21.12.83 Patentblatt 83/51

(84) Benannte Vertragsstaaten:
BE FR IT SE

(71) Anmelder: Nukem GmbH
Rodenbacher Chaussee 6 Postfach 11 00 80
D-6450 Hanau 11(DE)

(72) Erfinder: Abend, Klaus, Dr. Ing.
Am Kirchberg 1
D-6470 Büdingen(DE)

(72) Erfinder: Ruth, Ursula
Gartenstrasse 13
D-6451 Ronneburg 1(DE)

(74) Vertreter: Stoffregen, Hans-Herbert, Dr. Dipl.-Phys.
Patentanwälte Strasse & Stoffregen Am Markt 11
D-6450 Hanau/Main 1(DE)

(54) Verfahren zur Einstellung einer Anlage zur zerstörungsfreien Werkstoffprüfung mittels Ultraschall.

(57) Ein Verfahren zur Einstellung einer Anlage zur zerstörungsfreien Werkstoffprüfung mittels Ultraschall in den für die Prüfung mit ausgewählten Prüflingen gleicher Form und Abmessungen erforderlichen Ausgangszustand wird mit einer Anlage (10) ausgeübt, bei der ein auswechselbarer Schallkopf (12) in einer Halterung (14) mit je einem Antrieb (48, 50, 52) für die Änderung des Abstands zur Prüflingsoberfläche, die Änderung des Einschallwinkels und die Änderung der Fokusorientierung verbunden ist. Es sind Istwertgeber (56, 58, 60) für den Abstand, den Einschallwinkel und die Fokusorientierung vorhanden. Die Antriebe (48, 50, 52) und die Istwertgeber (56, 58 60) sind mit einer Steueranordnung verbunden, die einen Rechner (24) mit mindestens einem Speicher (28) und Eingabe-, Ausgabeeinheiten (32, 34, 36, 38) enthält. Im Speicher (28) sind Einstelldaten für den Schallkopfabstand, den Einschallwinkel und die Fokusorientierung enthalten, die als Sollwerte zur Bildung von Regelabweichungssignalen mittels den Istwerten verwendet werden. Die Antriebe (48, 50, 52) werden mitels der Regelabweichugssignale in die Sollstellungen verfahren. Anschließend wird ein Prüfarbeitsschritt mit einem Testkörper durchgeführt, mit dem Meßwerte über Fehler gewonnen werden, die mit vorgegebenen, gespeicherten Werten verglichen werden. Bei Abweichung wird eine Meldung erzeugt. Bei Übereinstimmung werden Zeitblenden und Signalschwellen eingestellt, und die Amplituden der Meßsignale von Innen- und Außenfehlern in Übereinstimmung gebracht. Werden bei einem weiteren Prüfarbeitsschritt noch Abweichungen in diesen Amplituden festgestellt, dann wird der Einschallwinkel geändert. Stimmen die Amplituden jedoch überein, ist die Anlage (10) für die Prüfung betriebsbereit.

./...

NUKEM GmbH
Rodenbacher Chaussee 6
6450 Hanau/Main 11 - Wolfgang

## Verfahren zur Einstellung einer Anlage zur zerstörungsfreien Werkstoffprüfung mittels Ultraschall

Die Erfindung bezieht sich auf ein Verfahren zur Einstellung einer Anlage zur zerstörungsfreien Werkstoffprüfung mittels Ultraschall in den für die Prüfung mit ausgewählten Prüflingen gleicher Form und Abmessungen erforderlichen Ausgangszustand, wobei ein auswechselbarer Schallkopf in einer Halterung mit je einem Antrieb für die Änderung des Abstands zur Prüflingsoberfläche, die Änderung des Einschallwinkels und gegebenenfalls die Änderung der Fokusorientierung und mit je einem Istwertgeber für den Abstand, den Einschallwinkel und gegebenenfalls die Fokusorientierung verbunden ist und wobei die Antriebe und die Istwertgeber mit einer Steueranordnung verbunden sind, die einen Rechner mit mindestens einem Speicher und mit Eingabe-, Ausgabeeinheiten enthält.

Ein derartiges Verfahren ist bereits bekannt (DE-OS 28 47 898). Bei diesem Verfahren werden die vom Schallkopf empfangenen Signale nach der Bewertung im Rechner wiederum in analoge Signale umgewandelt und auf einem Displaygerät dargestellt. Anhand der Anzeige werden Steuerbefehle in den Rechner eingegeben, um die Antriebe für den Abstand zwischen Schallkopf und Prüfling und für den Einschallwinkel so zu betätigen, daß der Schallkopf eine optimale Einstellung in Bezug auf den Prüfling erhält.

Der Erfindung liegt die Aufgabe zugrunde, ein Verfahren der eingangs beschriebenen Gattung derart weiterzuentwickeln, daß der Schallkopf

...

automatisch in die für die Prüfung optimale Einstellposition gebracht werden kann.

Die Aufgabe wird erfindungsgemäß dadurch gelöst, daß für den jeweils in die Halterung eingesetzten Schallkopf und für einen, den Prüflingen angepaßten Testkörper im Speicher enthaltene Einstelldaten über den Schallkopfabstand, den Einschallwinkel und gegebenenfalls die Fokusorientierung nach dem Einsetzen des Testkörpers in die Prüfstellung in der Anlage als Sollwerte einem die Antriebe, die Istwertgeber und den Rechner enthaltenden Regelkreis zugeführt werden, der die Antriebe mit Steuersignalen beaufschlagt, bis die Soll-Istwert-Differenzen null oder nahezu null sind, daß danach in einem ersten Prüfarbeitsschritt mit dem Testkörper als Prüfling die Meßwerte mit Vergleichsdaten, die dem Testkörper zugeordnet und gespeichert sind, auf Übereinstimmung innerhalb vorbestimmter Toleranzen geprüft werden, daß bei Überschreitung der Toleranzen eine Meldung erzeugt und/oder ein Diagnoseschritt in der Anlage durchgeführt wird, während bei Übereinstimmung zwischen den Meßwerten und den Vergleichsdaten eine Zeitblende für die vom Empfänger weitergeleiteten Signale und eine Schwelle für die weiterzuverarbeitenden empfangenen Signale eingestellt wird, daß anschließend in einem weiteren Prüfarbeitsschritt mit dem Testkörper als Prüfling die an im Testkörper vorhandenen Außen- und Innenfehlern gemessenen Amplituden auf Übereinstimmung innerhalb vorgegebener Toleranzen eingestellt und sodann geprüft werden, daß bei Übereinstimmung die Istwerte gespeichert und eine Freigabemeldung erzeugt wird, daß bei außerhalb der Toleranzen liegender Abweichung zwischen den Amplituden die Amplitudendifferenz als Regelabweichungssignal den Antrieb für den Einschallwinkel beaufschlagt, bis die Regelabweichung null oder nahezu null ist, und daß sodann erneut auf den ersten Prüfarbeitsschritt übergegangen wird, an den sich die auf den Prüfarbeitsschritt folgenden Schritte anschließen.

Eine Anlage zur zerstörungsfreien Werkstoffprüfung mittels Ultraschall läßt sich manuell nur langwierig mit großer Erfahrung und viel Geschick optimal in Bezug auf Prüfgeschwindigkeit, Fehlererkennbarkeit, Nutz/Störsignal-Verhältnis und/oder Reproduzierbarkeit einstellen. Mit dem oben erläuterten Verfahren ist demgegenüber unabhängig von einem Operator eine günstige Einstellung möglich. Für einen Prüfling von bestimmter Form und bestimmten Abmessungen ist lediglich eine einmalige Gewinnung der optimalen Einstellparameter von Schallkopfabstand, Einschallwinkel, Fokusorientierung, Zeitblende, Signalschwellenwerte, Prüfgeschwindigkeit, Impulsfolgefrequenz, Prüflingsdrehzahl und Meßgenauigkeit notwendig. Diese Parameter werden gespeichert und bei den späteren Einstellungen der gleichen oder von gleichartigen Prüfanlagen zur Einsparung manueller Eingriffe in den Einstellvorgang ausgenutzt. Die einmalige Gewinnung der Einstellparameter kann auf Testfehlerdurchläufen oder auf der Prüfung von natürlichen Fehlern beruhen. Eine andere Möglichkeit besteht darin, die Einstellparameter durch theoretische Berechnungen zu ermitteln. Das Verfahren kann bei den Prüfanlagen der eingangs beschriebenen Gattung auf einfache Weise eingesetzt werden. Die mit einer Anlage erhaltenen Einstellparameter können vorteilhafterweise für die Ausübung des Verfahrens mit anderen Anlagen benutzt werden. Ein weiterer Vorteil des oben beschriebenen Verfahrens ist in einer besseren Reproduzierbarkeit der Prüfergebnisse zu sehen. Durch die selbsttätige Einstellung der jeweiligen Prüfaufgabe lassen sich überdies Umrüstzeiten vermindern. Daraus ergibt sich eine wirtschaftlichere Prüfung, die insbesondere bei häufigen Umstellungen der jeweiligen Anlage auf unterschiedliche Prüflinge ins Gewicht fällt.

Bei einer bevorzugten Ausführungsform ist vorgesehen, daß durch Veränderung des Abstands vom Prüfling mit anschließendem Prüfarbeitsschritt und/oder durch Veränderung des Einschallwinkels mit anschließendem Prüfarbeitsschritt und/oder gegebenenfalls durch Änderung der Fokusorientierung mit nachfolgendem Prüfarbeitsschritt die Vergrößerung oder Verkleinerung der Streuung der Meßwerte gegenüber einem vorbestimmten Mittelwert festgestellt und die jeweilige Änderung

...

im Sinne einer Minimisierung der Streuung durchgeführt werden. Mit diesem Verfahren läßt sich auf adaptive Weise die optimale Einstellung der Anlage erreichen. Ausgangspunkt bei diesem adaptiven Verfahren ist eine Vorgabe großer Werte der Einstellparameter. Diese werden dann adaptiv verfeinert. Die Grobeinstellung kann zum Beispiel auf einer Schätzung der Prüffrequenz und der Prüfkopfart beruhen, mit der ein unfokussiertes, ein linien- oder ein punktfokussiertes Schallfeld erzeugt werden kann.

Zweckmäßige Ausgestaltungen der Erfindung sind in den Ansprüchen 3 bis 6 beschrieben.

Die Erfindung wird im folgenden anhand eines in einer Zeichnung dargestellten Ausführungsbeispiels näher erläutert, aus dem sich weitere Merkmale sowie Vorteile ergeben.

Es zeigen:

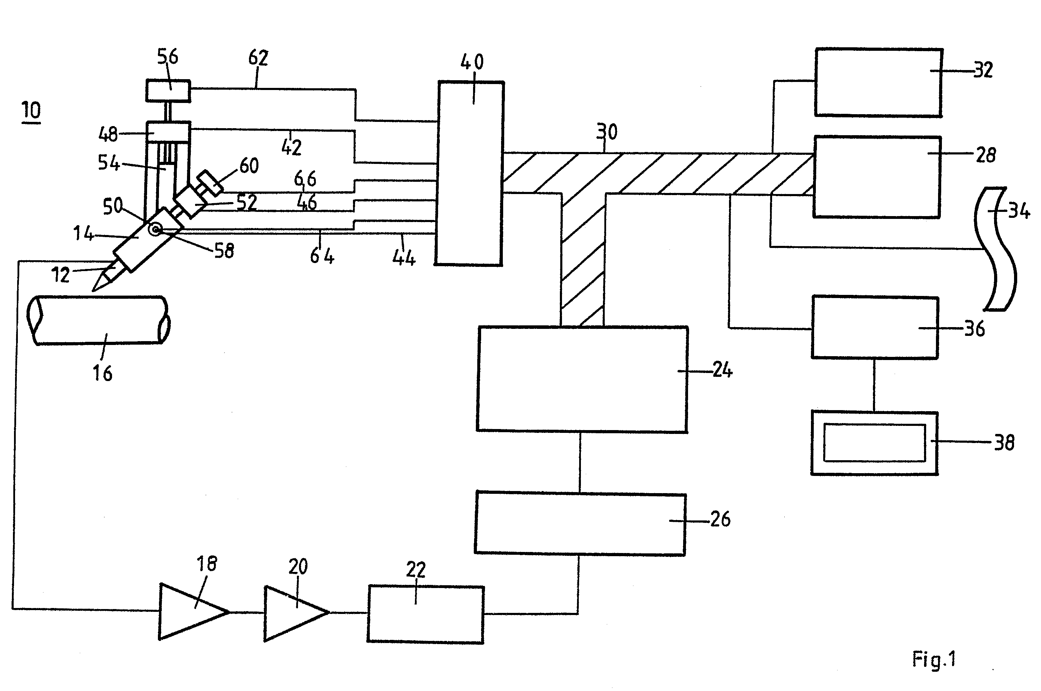

Fig. 1 eine Anlage zur zerstörungsfreien Werkstoffprüfung im Blockschaltbild,

Fig. 2 ein Diagramm der zur Einstellung der Anlage gemäß Fig. 1 durchgeführten Verfahrensschritte.

Eine Anlage 10 zur zerstörungsfreien Werkstoffprüfung mittels Ultraschall weist einen Schallkopf 12 auf, der in einem Halter 14 eingesetzt ist. Als Prüfling ist ein Rohr 16 dargestellt, das beispielsweise auf Innen- und Außenfehler geprüft werden soll. Der Schallkopf 12 wird zum Beispiel mit einer Prüffrequenz von 5 MHz im Impuls-Echo-Betrieb beaufschlagt. Der Schallkopf 12, der zugleich als Sender und Empfänger bei Schallwellen ausgenutzt werden kann, ist empfangsseitig mit einem Vorverstärker 18 verbunden, dem ein Hauptverstärker

...

20 nachgeschaltet ist. An den Hauptverstärker 20 ist ein Analog-Digital-Umsetzer 22 angeschlossen, dessen Ausgänge mit einem Rechner 24 verbunden sind. Zwischen den Ausgängen des Analog-Digital-Umsetzers 22 und den Eingängen des Rechners 24 ist eine Data-Reduction-Schaltung 26 angeordnet, die Schwellenwertschaltkreise enthält, deren Schwellen durch den Rechner 24 eingestellt werden können. Die vom Analog-Digital-Umsetzer 22 vorgegebenen Digitalwerte werden nur dann dem Rechner 24 zugeleitet, wenn sie die in der Data-Reduction-Schaltung 26 eingestellten Schwellen überschreiten. Der Rechner 24, der zum Beispiel einen oder mehrere Mikroprozessoren enthalten kann, ist mit mindestens einem Speicher 28 über einen Daten- und Steuerbus 30 verbunden. An den Daten- und Steuerbus 30 ist auch eine Tastatur-Eingabe 32, ein Drucker 34 und ein Digital-Analog-Umsetzer 36 angeschlossen, dessen Ausgang eine Bildschirmanzeigeeinheit 38 speist. Mit dem Steuer- und Datenbus 30 ist ferner eine Eingabe-, Ausgabeschaltung 40 verbunden.

Die Eingabe-, Ausgabeschaltung 40 speist drei Ausgangskanäle 42, 44, 46, die je mit einem Antrieb 48 für die Veränderung des Abstands zwischen dem Schallkopf 12 und dem Prüfling 16, einem Antrieb 50 für die Veränderung des Einschallwinkels und einem Antrieb 52 für die Fokusorientierung verbunden sind. Bei den Antrieben 48, 50, 52 kann es sich um Gleichstrommotore handeln. Der Antrieb 48 treibt zum Beispiel einen Schlitten 54 an, auf dem der Halter 14 um zwei Achsen drehbar gelagert ist. Die eine Drehachse verläuft senkrecht zur Längsachse des Halters 14 und des Schallkopfes 12. Die andere Drehachse stimmt mit der Längsachse des Halters 14 und des Schallkopfes 12 überein. Die Drehbewegung des Halters 14 und des Schallkopfes 12 um die erste Drehachse wird durch den Antrieb 50 erzeugt. Die Drehbewegung um die Längsachse von Schallkopf 12 und Halter 14 wird durch den Antrieb 52 bewirkt.

Mit den von den Antrieben 48, 50, 52 in Drehung versetzbaren, nicht näher bezeichneten Achsen für die Abstandsveränderung, Einschallwinkeländerung und Fokusorientierung sind jeweils Istwertgeber 56, 58, 60 verbunden, die über Kanäle 62, 64, 66 an die Ein-, Ausgabeschaltung 40 gelegt sind. Bei den Istwertgebern 56, 58, 60, die jeweils Meßwerte des Abstands des Schallkopfes 12 vom Prüfling 16, der Größe des Einschallwinkels in Bezug auf eine Ausgangswinkellage und der Größe des Fokuswinkels in Bezug auf eine vorgegebene Ausgangslage liefern, kann es sich um Winkelkodierer mit absoluter oder inkrementaler Kodierung handeln. Auch Resolver können als Istwertgeber verwendet werden. Bei Resolvern ist eine Umwandlung der Ausgangssignale in digitale Werte erforderlich. Winkelkodierer mit absoluter Kodierung geben digitale Signale ab, deren Werte den jeweiligen Winkelstellungen proportional sind. Bei inkrementaler Kodierung wird eine der Drehstellung proportionale Anzahl von Impulsen erzeugt, die zur Feststellung des Drehwinkels aufsummiert werden müssen.

Falls die Antriebe 48, 50, 52 Gleichstrommotore sind, müssen die vom Rechner 24 ausgegebenen digitalen Steuersignale über Digital-Analog-Umsetzer und Verstärker in analoge Signale umgewandelt werden. Es ist aber auch möglich, für die Antriebe 48, 50, 52 Schrittmotore zu verwenden, die von Impulsen gesteuert werden. Die Anzahl der Impulse bestimmt den Drehweg der Antriebe 48, 50, 52. Sofern gewährleistet ist, daß die Antriebe 48, 50, 52 sicher den von der jeweiligen Impulszahl bestimmten Drehweg zurücklegen, kann diese Impulszahl zugleich als Istwert der jeweiligen Lage ausgenutzt werden. In diesem Fall lassen sich die Istwertgeber 56, 58 und 60 einsparen. Als Istwertgeber können dann Zähler verwendet werden, die die Zahl der an die Schrittmotoren ausgegebenen Impulse erfassen.

Die Ein-, Ausgabeschaltung 40 enthält neben Speichern für die vom Rechner 24 ausgegebenen digitalen Steuersignale und die von den Istwertgebern 56, 58, 60 erzeugten Positionsmeßwerte auch die an die Art der Istwertgeber angepaßten Anpaßschaltungen und die an die Art

...

der Antriebe 48, 50, 52 angepaßten Treiberschaltungen, die nicht näher dargestellt sind.

Einstellparameter sind der Schallkopfabstand, der Einschallwinkel, die Fokusorientierung, die Zeitblende für die empfangenen Signale, die durch die Date-Reduction-Schaltung 26 zu erfolgende Datenreduzierung, die Prüfgeschwindigkeit, die Impulsfolgefrequenz, die Prüflingsdrehzahl und die Meßgenauigkeit.

Die Prüfgeschwindigkeit soll bei großem Auflösungsvermögen der Anlage 10 und guter Reproduzierbarkeit der Prüfung hoch sein. Aus den mit dem Prüfling vorgegebenen Außenabmessungen, der Fokusbreite des Schallkopfes 12 und der Testfehlerlänge ergibt sich eine bestimmte Vorschubgeschwindigkeit für den Prüfling. Die Prüfkopfart hinsichtlich der Fokussierung läßt sich mit der gewünschten Prüfgeschwindigkeit, der gegebenen Impulsfolgefrequenz, der gegebenen Drehzahl des Prüflings, den Rohrdaten, die sich zum Beispiel auf den Werkstoff und die Oberflächenbeschaffenheit beziehen, und der Prüffrequenz auswählen. Die Prüfkopfart kann auch unter Berücksichtigung der vorstehend erwähnten Parameter anhand von Erfahrungen bestimmt werden, die mit Schallköpfen bei vorausgegangenen Messungen gewonnen wurden.

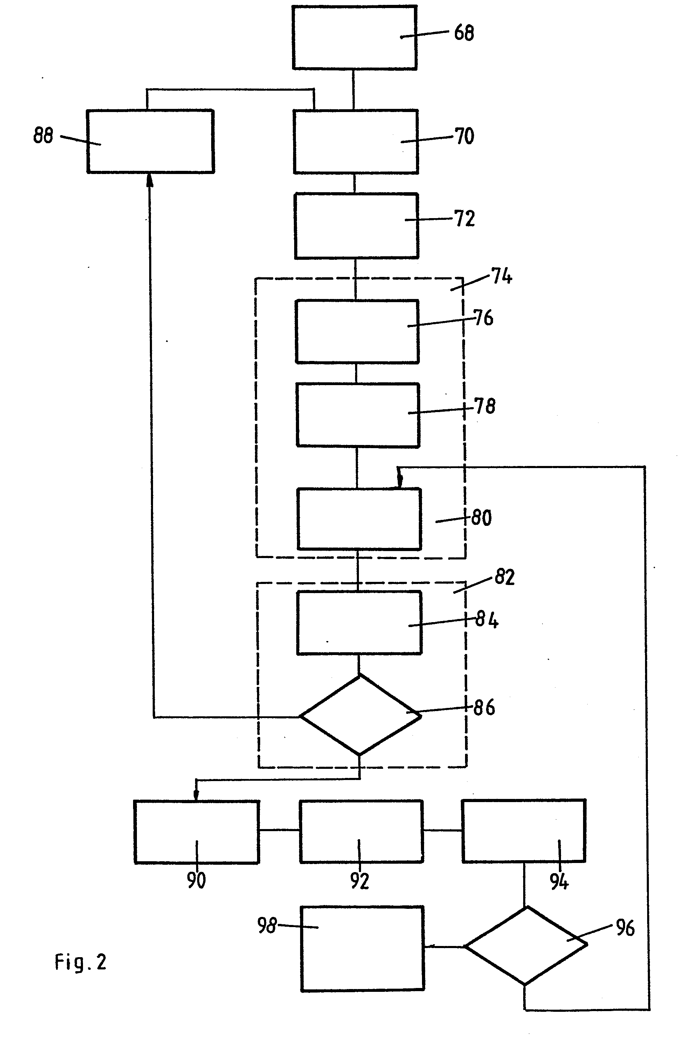

Der ausgewählte Schallkopf 12 wird in den Halter 14 eingesetzt. Ferner wird als Prüfling 16 ein Testkörper verwendet und in der Anlage 10 in die Ausgangsposition gebracht. Anschließend wird die Anlage 10 für die automatische Einstellung in den für eine optimale Prüfung gewünschten Ausgangszustand freigegeben. Dies kann über die Eingabe eines entsprechenden Befehls auf der Tastatur 32 erfolgen. In Fig. 2 ist die Phase des Einbaus des Schallkopfs 12 und Einfügung des Prüflings 16 nebst den damit verbundenen Maßnahmen durch den mit 68 bezeichneten Schritt der Anlageneinstellung dargestellt. Die Einstellung der Prüffrequenz ist in Fig. 2 als gesonderter Schritt 70 dargestellt. Auf den Schritt 70 folgt in einem weiteren Schritt 72 die Freigabe der Anlage 10 für die automatische Einstellung.

...

Nach der Freigabe wird in einem Verfahrensschritt 74 eine Regelung durchgeführt. Die Sollwerte für diesen Regelungsabschnitt sind die im Speicher 28 enthaltenen Daten über die für den jeweiligen Prüfling günstigsten Einstellwerte des Schallkopfabstandes, des Einschallwinkels und der Fokusorientierung. Hierbei ist vorausgesetzt, daß der Schallkopf 12 fokussierte Schallwellen erzeugt. Ausgangspunkt für diese Regelung ist vorzugsweise eine definierte Endlage des Schallkopfes 12, die von den Istwertgebern dem Rechner 24 über die Eingabe-, Ausgabeschaltung 40 mitgeteilt wird. Im Verfahrensschritt 74 sind die Antriebe 48, 50, 52, die Istwertgeber 56, 58, 60 und der Rechner 24 über den Daten- und Steuerbus 30 und die Eingabe-, Ausgabeschaltung 40 zu einem Regelkreis vereinigt. Der Rechner 24 beaufschlagt die Antriebe 48, 50, 52 mit den Differenzen zwischen den gespeicherten Sollwerten und den von den Istwertgebern 56, 58, 60 angegebenen Signalen proportionalen Steuersignalen. Die Antriebe 48, 50, 52 setzen sich daraufhin in Bewegung und bringen den Halter 14 nebst Schallkopf 12 in die durch die Daten im Speicher 28 bestimmte Stellung. Es laufen für die verschiedenen Antriebe 48, 50, 52 jeweils drei Regelschritte ab, die in Fig. 2 mit 76, 78, 80 bezeichnet sind.

lm Regelschritt 76 wird der Schallkopf 12 und der Halter 14 auf die vorgegebene Fokuslinie eingestellt. Danach wird im Regelschritt 78 der Abstand des Schallkopfes 12 von der Oberfläche des Prüflings 16 in Übereinstimmung mit dem gespeicherten Sollwert gebracht. Anschließend wird im Regelschritt 80 der Schallkopf 12 in die vorgegebene Einschallwinkelstellung bewegt. Die Schritte 76, 78, 80 laufen gemäß der Fig. 2 nacheinander ab. Ein solcher Vorgang ist vorteilhaft, wenn die Kapazität des Rechners 24 nur für die Durchführung eines Regelvorgangs neben den weiteren Rechneraufgaben ausreicht. Bei ausreichender Rechnerkapazität insbesondere bei hohen Rechnergeschwindigkeiten, können die Schritte 76, 78 und 80 auch gleichzeitig ablaufen.

Es ist günstig, wenn neben der Lageregelung des Schallkopfes 12 auch noch eine Geschwindigkeitsregelung durchgeführt wird. Auf diese

...

Weise läßt sich die Dauer der Regelschritte 68, 70, 72 kürzen. Während die Lageregelung über die Zahl von Steuerimpulsen, denen jeweils ein bestimmtes Weginkrement zugeordnet ist, erfolgt, kann die Geschwindigkeit über die Frequenz dieser Impulse gesteuert werden. Es kann im Rechner eine auf die Antriebe 48, 50, 52 und auf die mit diesen verbundenen Massen abgestimmte Bremskennlinie gespeichert sein, die von einer gewissen Abstandsdifferenz zwischen Soll- und Istwert dazu benutzt wird, um die exakte Stillsetzung der Antriebe an den Sollstellen zu erreichen.

Wenn der Schallkopf 12 seine Sollstellungen in Bezug auf Abstand, Einschallwinkel und Fokusorientierung erreicht hat, dann ist der Verfahrensschritt 74 beendet. Es beginnt selbsttätig ein neuer Verfahrensschritt, ein sogenannter erster Prüfarbeitsschritt 82. Der Prüfarbeitsschritt beinhaltet einen Durchlauf des Testkörpers und die Prüfung der durch die Fehler des Testkörpers erzeugten Meßwerte mit Vergleichsdaten, die dem Testkörper zugeordnet sind, auf Übereinstimmung innerhalb vorgegebener Toleranzen. Der Durchlauf des Testkörpers 16 ist in Fig. 2 mit 84 bezeichnet. Der Vergleichsarbeitsschritt hat gemäß Fig. 2 die Ziffer 86.

Bei den Vergleichsdaten für die einzelnen im Testkörper vorhandenen Fehlerarten, zum Beispiel Längsfehler innen, Längsfehler außen, Querfehler innen, Querfehler außen, handelt es sich um Mittelwerte. Zu diesen Mittelwerten sind Toleranzen der Streuwerte vorhanden. Werden diese beiderseits der jeweiligen Mittelwerte überschritten, dann gibt der Rechner 24 eine entsprechende Meldung aus, die in Fig. 2 mit 88 bezeichnet ist. Im Anschluß an die Meldung 88 kann die Anlage 10 mit Diagnoseschritten geprüft werden. Diese Maßnahme wird später noch eingehender erläutert.

Liegen die von den Testfehlern verursachten Meßwerte innerhalb der Toleranzen, was als Übereinstimmung vom Rechner 24 gewertet wird, dann schließt sich ein weiterer Verfahrensschritt 90 an, in dem die

...

Zeitblende für die vom den Verstärkern 18, 20 weitergeleiteten Signale gesetzt wird. Durch diese Zeitblende werden die für die Messung gewünschten Echosignale ausgewählt, d.h., es wird eine Blende zwischen dem Anzeigenbereich von Außenfehler und Innenfehler gesetzt. Auf den Verfahrensschritt 90 folgt ein Verfahrensschritt 92, der den Betrag der Reduzierung der gewonnenen Werte in der Data-Reduction-Schaltung 26 beinhaltet. Durch die von Vorgabewerten des Rechners 24 bestimmte Einstellung der Schwellenwerte lassen sich Störsignale unterdrücken. Es folgt ein zusätzlicher Verfahrensschritt 94, in dem unter Kontrolle des Rechners 24 die Amplituden der Innen- und Außenfehlermeßwerte des Testkörpers in Übereinstimmung miteinander gebracht werden. Dies kann durch eine Beeinflussung der Verstärkung erfolgen. An den Verfahrensschritt 94 schließt sich ein weiterer Prüfarbeitsschritt 96 an, bei dem die während der Prüfung des Testkörpers bei Innen- und Außenfehlern auftretenden Signalamplituden auf Übereinstimmung innerhalb vorgegebener Toleranzen geprüft werden. Bei Übereinstimmung schließt sich in einem weiteren Verfahrensschritt 98, eine Meldung über den Abschluß des Einstellvorgangs an. Die Anlage 10 steht dann für die Zufuhr von Prüflingen zur Verfügung. Besteht jedoch keine Übereinstimmung zwischen den Signalamplituden der Innen- und Außenfehler des Testkörpers, dann wird auf den Verfahrensschritt 80 und danach auf die folgenden Verfahrensschritte übergegangen.

Die Einstellung optimaler Parameter kann zweckmäßigerweise im Rahmen einer adaptiven Regelung erfolgen. Es wird hierbei ein Gütekriterium festgelegt, das sich auf mehrere Parameter beziehen kann. Ein solches Gütekriterium kann sein, daß die Streuung der anhand des Testkörpers erhaltenen Meßwerte bei Fehlern möglichst wenig vom Mittelwert abweicht. Aus den Meßwerten wird deshalb mittels des Rechners 24 die Streuung der Meßwerte nach einem Prüfarbeitsschritt ermittelt. Mit zahlreichen Prüfarbeitsschritten wird im Rahmen einer Trial- und Error-Methode (Annäherungsverfahren) der

...

Einschallwinkel, die Fokusorientierung und der Abstand jeweils geändert. Jede Änderung wird daraufhin untersucht, ob sie eine Reduzierung der Streuung bewirkt. Eine Verminderung der Streuung wird
als eine Verbesserung der Einstellung und demnach als Ausgangsbasis
für den nächsten Prüfarbeitsschritt ausgenutzt. Die Optimierung läuft
so ab, daß immer nur ein Parameter, zum Beispiel der Abstand, die
Fokusorientierung oder der Einschallwinkel vor einem Prüfarbeitsschritt geändert wird. Wenn sich bei weiteren Änderungen dieser
Parameter keine Verkleinerung der Streuung mehr erreichen läßt,
werden die vorhandenen Istwerte als optimale Werte in den Speicher
28 eingegeben. Diese Werte können für spätere Einstellungen der
Anlage zur Prüfung der gleich ausgebildeten Werkstücke verwendet
werden. Mit derartig optimierten Einstellparametern läßt sich eine
sehr gute Reproduzierbarkeit der Prüfergebnisse erreichen.

Die oben erwähnte Diagnose der Ursache der Abweichung der Meß- und
Vergleichswerte kann vorzugsweise Fehlersuchmethoden beinhalten. Im
einfachsten Fall wird ein Anschluß an die Meldung 88 eine andere
Prüffrequenz eingestellt, sofern die Bauart des verwendeten Schallkopfs 12 eine solche Betriebsweise zuläßt. Sollte eine derartige
Veränderung der Prüffrequenz, gegebenenfalls nacheinander auf verschiedene Werte, nicht die geforderte Übereinstimmung zwischen den
Meß- und Vergleichswerten bringen, dann wird eine etwas umfangreichere Fehlersuchmethode verwendet. Zunächst wird der Verstärkungsgrad des Verstärkers 20 geändert. Anschließend wird der Verfahrensschritt 82 durchgeführt. Liegen nun die Meßwerte innerhalb der
Toleranzen, dann wird der neu eingestellte Verstärkungsgrad in den
Speicher 28 für eine spätere Verwendung übernommen, während das
Verfahren mit dem Schritt 90 fortgesetzt wird. Wenn die geforderte
Übereinstimmung nicht festgestellt wird, erfolgt wiederum die Meldung
88.

Im Anschluß an oder auch anstelle der Meldung 88 werden zweckmäßigerweise weitere Diagnoseschritte durchgeführt. Diese Schritte be-

...

inhalten die Beaufschlagung der Data-Reduction-Schaltung 26, des Speichers 28 und der Ein-, Ausgabeschaltung 40 mit durch ein Schema vorgegebenen Testsignalen. Danach werden die in diesen Teilen tatsächlich vorhandenen Signale mit den ursprünglichen Testdaten verglichen. Bei Abweichungen kann das defekte Teil durch den Rechner 24 geortet und auf einer Ausgabeeinheit angezeigt werden. Auch ein Prüfverfahren innerhalb des Rechners 24 kann ausgelöst werden, um festzustellen, ob der Rechner 24 fehlerhaft ist.

Wenn die Prüfung ergibt, daß der Rechner 24 und die mit diesem verbundenen Steuerungselemente einwandfrei arbeiten, wird in einem weiteren Diagnoseschritt der Schallkopf 12 mit Prüfsignalen beaufschlagt, die vorbestimmte Empfangssignale erzeugen müssen. Treten diese Empfangssignale nicht auf, dann wird eine Meldung ausgegeben, die einen Defekt des Schallkopfs 12 anzeigt.

Falls sich durch die oben beschriebenen Diagnoseschritte kein Fehler in der Anlage 10 feststellen läßt, werden auf der Basis der gespeicherten Daten über den Werkstoff der Prüfkörper, die Oberflächenbeschaffenheit der Prüfkörper, die gewünschte Prüfgeschwindigkeit, die Drehzahl der Prüfkörper, die gewünschte Meßgenauigkeit, die vorgegebene Impulsfolgefrequenz, die Schallkopfart und die mit dieser Schallkopfart zu verwendende Prüffrequenz ermittelt und über die Ausgabeeinheit angezeigt. Danach kann der neue Schallkopf in die Anlage 10 eingesetzt werden. Anschließend werden wiederum die in Fig. 2 dargestellten Verfahrensschritte durchgeführt.

Unter Schallkopfart sind hierbei die im Hinblick auf die Fokussierung unterschiedliche Verhalten zeigenden Schallköpfe, nämlich unfokussierte, linien- oder punktfokussierte zu verstehen. Bei hohen Prüfgeschwindigkeiten werden beispielsweise linienfokussierte Schallköpfe eingesetzt, um eine ausreichend dichte Lage der Prüfstellen auf der Oberfläche des Prüflings zu erhalten.

- - - - - - - - - -

0096338

NUKEM GmbH
Rodenbacher Chaussee 6
6450 Hanau/Main 11 - Wolfgang

Patentansprüche:

1. Verfahren zur Einstellung einer Anlage zur zerstörungsfreien Werkstoffprüfung mittels Ultraschall in den für die Prüfung mit ausgewählten Prüflingen gleicher Form und Abmessungen erforderlichen Ausgangszustand, wobei ein auswechselbarer Schallkopf in einer Halterung mit je einem Antrieb für die Änderung des Abstands zur Prüflingsoberfläche, die Änderung des Einschallwinkels und gegebenenfalls die Änderung der Fokusorientierung und mit je einem Istwertgeber für den Abstand, den Einschallwinkel und gegebenenfalls die Fokusorientierung verbunden ist und wobei die Antriebe und die Istwertgeber mit einer Steueranordnung verbunden sind, die einen Rechner mit mindestens einem Speicher und mit Eingabe-, Ausgabeeinheiten enthält, d a d u r c h   g e k e n n z e i c h n e t, daß für den jeweils in die Halterung (14) eingesetzten Schallkopf (12) und für einen, den Prüflingen zugeordneten Testkörper (16) Einstelldaten über den Schallkopfabstand, den Einschallwinkel und gegebenenfalls die Fokusorientierung nach dem Einsetzen des Testkörpers in die Prüfstellung in der Anlage (10) als Sollwerte einem die Antriebe (48, 50, 52), die Istwertgeber (56, 58, 60) und den Rechner (24) enthaltenden Regelkreis zugeführt werden, der die Antriebe mit Steuersignalen beaufschlagt, bis die Soll-Istwert-Differenzen null oder nahezu null sind, daß danach in einem ersten Prüfarbeitsschritt mit dem Testkörper als Prüfling

...

die Meßwerte mit Vergleichsdaten, die dem Testkörper zugeordnet und gespeichert sind, auf Übereinstimmung innerhalb vorbestimmter Toleranzen geprüft werden, daß bei Überschreitung der Toleranzen eine Meldung erzeugt und/oder ein Diagnoseschritt in der Anlage durchgeführt wird, während bei Übereinstimmung zwischen den Meßwerten und den Vergleichsdaten eine Zeitblende für die vom Empfänger (18, 20) weitergeleiteten Signale und eine Schwelle für die weiterzuverarbeitenden empfangenen Signale eingestellt wird, daß anschließend in einem weiteren Prüfarbeitsschritt mit dem Testkörper als Prüfling die an im Testkörper vorhandenen Außen- und Innenfehler gemessenen Amplituden auf Übereinstimmung innerhalb vorgegebener Toleranzen eingestellt und sodann geprüft werden, daß bei Übereinstimmung die Istwerte abgespeichert und eine Freigabemeldung erzeugt wird, daß bei außerhalb der Toleranzen liegenden Abweichungen zwischen den Amplituden die Amplitudendifferenz als Regelabweichungssignal den Antrieb (50) für den Einschallwinkel beaufschlagt, bis die Regelabweichung null oder nahezu null ist, und daß sodann erneut auf den ersten Prüfarbeitsschritt übergegangen wird, an den sich die auf den Prüfarbeitsschritt folgenden Schritte anschließen.

2.  Verfahren nach Anspruch 1,
    d a d u r c h   g e k e n n z e i c h n e t,
    daß durch Veränderung des Abstands vom Prüfling mit anschließendem Prüfarbeitsschritt und/oder durch Veränderung des Einschallwinkels mit anschließendem Prüfarbeitsschritt und/oder gegebenenfalls durch Änderung der Fokusorientierung mit nachfolgendem Prüfarbeitsschritt die Vergrößerung oder Verkleinerung der Streuung der Meßwerte gegenüber einem vorbestimmten Mittelwert festgestellt und die jweilige Änderung im Sinne einer Minimalisierung der Streuung durchgeführt werden.

...

3. Verfahren nach Anspruch 1 oder 2,

d a d u r c h   g e k e n n z e i c h n e t ,

daß im Diagnoseschritt der Verstärkungsgrad eines dem Empfänger nachgeschalteten Verstärkers (20) geändert wird, daß anschließend auf den ersten Prüfarbeitsschritt übergegangen wird, und daß bei erneutem Überschreiten der Toleranzen eine Meldung über einen Fehler des Verstärkers erzeugt wird, während bei innerhalb der Toleranzen liegenden Meßwerten der neu eingestellte Verstärkungsgrad abgespeichert und auf den die Zeitblenden- und Schwelleneinstellung umfassenden Arbeitsschritt übergegangen wird.

4. Verfahren nach Anspruch 3,

d a d u r c h   g e k e n n z e i c h n e t ,

daß zusätzlich zu der Meldung in weiteren Arbeitsschritten die dem Verstärker (20) nachgeschalteten Steuerungselemente mit Prüfsignalen aus dem Rechner (24) beaufschlagt werden und daß bei Feststellung eines fehlerbehafteten Steuerungselementes eine dieses Steuerungselement anzeigende Meldung ausgegeben wird.

5. Verfahren nach Anspruch 1 oder einem der folgenden Ansprüche,

d a d u r c h   g e k e n n z e i c h n e t ,

daß in einem weiteren Diagnoseschritt der Schallkopf (12) zur Feststellung eines Defekts mit Prüfsignalen beaufschlagt wird und daß bei Abweichung der Ausgangssignale von vorbestimmten Werten eine Meldung über den Defekt des Schallkopfs erzeugt wird.

6. Verfahren nach Anspruch 1 oder einem der folgenden Ansprüche,

d a d u r c h   g e k e n n z e i c h n e t ,

daß nach Durchführung der Diagnoseschritte ohne Feststellung von Fehlern aus gespeicherten Daten über den Werkstoff des Testkörpers (16) die Oberflächenbeschaffenheit des Testkörpers, die vorbestimmte Prüfgeschwindigkeit, die Impulsfolgefrequenz, die Drehzahl des Testkörpers und über die Meßgenauigkeit die Prüffrequenz für den Schallkopf (12) und die Prüfkopfart bestimmt und angezeigt wird.

- - - - - - - - - -

Fig.1

0096338

0096338

Fig.2